# Europäisches Patentamt
# European Patent Office
# Office européen des brevets

(19)

(11) Veröffentlichungsnummer: **0 003 292**
**B1**

(12) **EUROPÄISCHE PATENTSCHRIFT**

(21) Anmeldenummer: **79100083.9**

(22) Anmeldetag: **12.01.79**

(51) Int. Cl.³: **G 11 B 23/50, G 11 B 5/84, B 03 C 1/30, B 65 H 17/00**

(54) Reinigungsanordnung für Folienbahnen mit einer Magnetschicht

(30) Priorität: **19.01.78 DEU 7801442**

(43) Veröffentlichungstag der Anmeldung:
**08.08.79 Patentblatt 79/16**

(45) Bekanntmachung des Hinweises auf die Patenterteilung:
**01.10.80 Patentblatt 80/20**

(84) Benannte Vertragsstaaten:
**DE FR GB IT**

(56) Entgegenhaltungen:
**DE - C - 400 400
DE - C - 722 578
DE - U - 7 801 442
US - A - 2 079 241
US - A - 2 591 121
US - A - 3 616 478
US - A - 3 757 374**

(73) Patentinhaber: **BASF Aktiengesellschaft
Carl-Bosch-Strasse 38
D - 6700 Ludwigshafen (DE)**

(72) Erfinder: **Schoettle, Klaus
Ladenburger Strasse 70
D - 6900 Heidelberg (DE)
Dobler, Peter
Wanderstrasse 61
D - 6700 Ludwigshafen (DE)
Lewin, Helmut
Wormser Landstrasse 30
D - 6712 Bobenheim-Roxheim 2 (DE)
Koester, Eberhard, Dr.
Max-Slevogt-Strasse 23
D - 6710 Frankenthal (DE)**

Courier Press, Leamington Spa, England.

## Reinigungsanordnung für Folienbahnen mit einer Magnetschicht

Die Erfindung bezeiht sich auf eine Anordnung zum kontinuierlichen Reinigen der Oberfläche von mit mindestens einer Magnetschicht versehenen Folienbahn, insbesondere von Magnetbändern, bei der die zu reinigende Oberfläche mit Hilfe einer Bahnführung mit einem Faservliesband in engem Kontakt steht.

Es ist bekannt (DE—OS 24 16 419), Folienbahnen zum Reinigen über ein Faservliesband zu führen und die Reinigungswirkung durch eine Saugwalze, über die das Faservliesband geführt ist, zu verstärken. Um einen engen Kontakt zwischen Folienbahnen und Faservliesband zu erhalten, wird die Folienbahn durch entsprechende Bahnführung an das Faservliesband gedrückt, so daß der Bahnzug und der Umschlingungswinkel der Bahn um das im Bogen geführte Faservliesband für die Reinigungswirkung maßgebend sind.

Bei sehr dünnen Folienbahnen bzw. -bändern besteht die Gefahr, daß der für die gewünschte Wirksamkeit erforderliche Saugdruck an den Öffnungen der Saugwalze zu Deformationen des Bahn- bzw. Bandmaterials führt, beispielsweise zu Verdehnungen und Prägungen. Aus dem gleichen Grunde kann der Bahnzug und die Umschlingung nicht groß gewählt werden. Mit den bisher bekannten Reinigungseinrichtungen sind daher für sehr dünne Bahnen bzw. Bänder keine befriedigenden Ergebnisse zu erzielen gewesen. Nachteilig anzusehen ist auch noch, daß die pneumatische Saugvorrichtung eine konstruktiv aufwendige Lösung darstellt.

Vorliegender Erfindung liegt die Aufgabe zugrunde, eine Reinigungsanordnung zu schaffen, mit der auch sehr dünne, mit Magnetschichten versehene Folienbahnen bzw. -bänder wirkungsvoll und zugleich schonend gereinigt werden können. Die Anordnung soll in ihrem Aufbau möglichst einfach sein.

Die erfindungsgemäße Lösung ergibt sich dadurch, daß im Bereich der Kontaktstelle hinter dem Faservliesband auf der Folienbahn abgewandten Seite die einen Luftspalt begrenzenden Polschuhe eines Magneten angeordnet sind.

Es kann dabei günstig sein, die zu reinigende Bahn in einem Winkel über das Faservliesband zu führen.

Die Kraftwirkung des Magneten auf die Folienbahn bzw. -band ist gering, jedoch groß genug, um verhältnismäßig lose mit der Bahnoberfläche verbundene, magnetisierbare Staubpartikel in das Faservliesband zu ziehen. Besonders vorteilhaft anzusehen ist, daß die zusätzliche Kraftwirkung gleichmäßig über die gesamte Bahn- bzw. Bandbreite verteilt ist. Dadurch werden örtlich konzentrierte Andruckkräfte auf das Bahnmaterial vermieden und die Oberfläche gleichmäßig gereinigt. Ferner verhindern die magnetischen Anziehungskräfte, daß die oberflächlich auf dem Faservliesband sitzenden Staubpartikel von der zu reinigenden Bahn wieder mitgenommen werden. Bei Versuchen hat sich gezeigt, daß auch ein großer Teil der nichtmagnetischen Staubpartikel infolge irgendwelcher Bindekräfte zusammen mit den magnetischen Teilchen von der Oberfläche entfernt werden.

Die erfindungsgemäße Anordnung wird nachfolgend anhand der Zeichnungen näher erläutert.

Es zeigt

Fig. 1 Eine Gesamtansicht der Anordnung

Fig. 2 Eine bevorzugte Anordnung eines Folienbandes zum Faservliesband

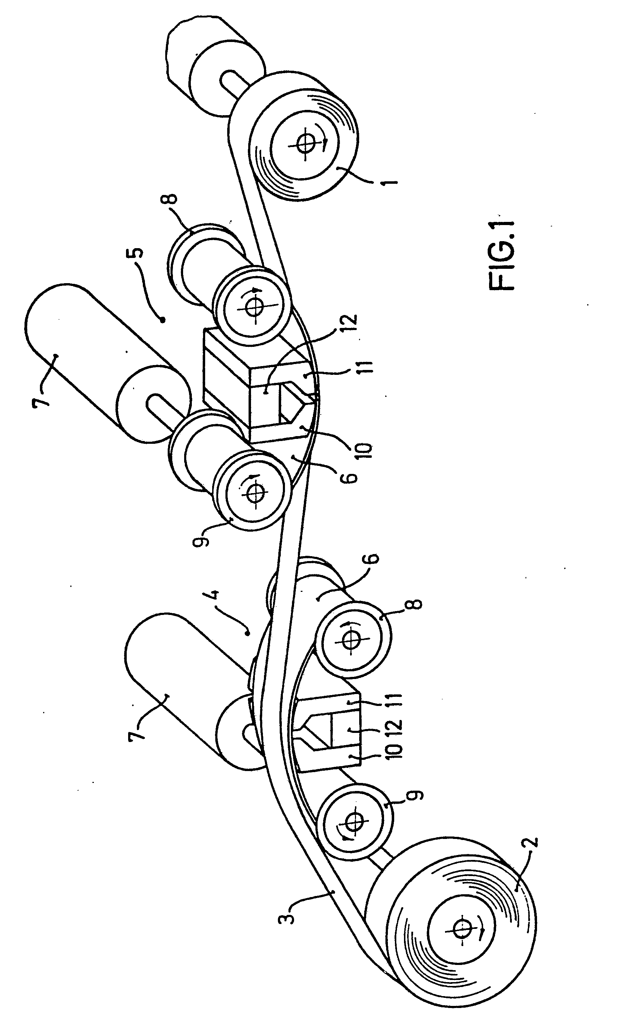

Figur 1 zeigt die Anordnung zum Reinigen der Vorder- und Rückseite eines Magnetbandes. Bei anderen Folienbahnen ändert sich lediglich die Bemessung der Funktionsteile.

Zwischen einer antreibbaren Auf- und Abwickelrolle 1 und 2 ist das Magnetband 3 sowohl mit der Vorder- als auch mit der Rückseite über jeweils eine Faservliesbandanordnung 4 und 5 geführt. Das Faservliesband 6 besteht aus handelsüblichen Gewebefasern, vorzugsweise aus Polyamidfasern, und wird während des Reinigungsbetriebes entgegen dem zu reinigenden Magnetband 3 mit Hilfe eines elektrischen Antriebes 7 von einer Vorratsspule 8 auf eine Aufnahmespule 9 gewickelt. Zwischen den Spulen 8 und 9 ist das Faservliesband 6 im Bogen über die Polschuhe 10 und 11 eines Magneten 12 geführt. Der Magnet kann aus einem Dauermagneten (z.B. Ferrit oder Samarium, Cobalt) oder aus einem Elektromagneten bestehen. Für die Polschuhe 10, 11 kommen vorzugsweise weichmagnetische Materialien (z.B. kohlenstoffarmer Stahl) in Betracht.

Der Luftspalt zwischen den Polschuhen beträgt 0,5 bis 10 mm, vorzugsweise 1,0 bis 5 mm. Dadurch wird erreicht, daß die magnetischen Feldlinien in das Magnetband 3 eindringen, das in diesem Bereich in engem Kontakt mit dem Faservliesband 6 steht.

Die Auf- und Abwickelrolle 1 und 2 und die beiden Faservliesbandanordnungen 4 und 5 nehmen zueinander eine solche Lage ein, daß die beiden Faservliesbänder 6 vom Magnetband 3 bogenartig umschlungen werden. Bei sehr dünnen Magnetbändern ($<10$ $\mu$m) sollte ein Umschlingungswinkel von 30° nicht überschritten werden. Dabei ist ein Bandzug von $<10$ N je cm Bandbreite zugrundegelegt. Zur Einstellung des Anpreßdrucks des Bandes 3 gegen das Faservliesband ist der Umschlingswinkel durch die auf einer zum Faservliesband senkrecht gerichteten Schiene (in der Zeichnung nicht dargestellt) bewegliche und feststellbare Magnetanordnung 10, 11, 12 veränderbar.

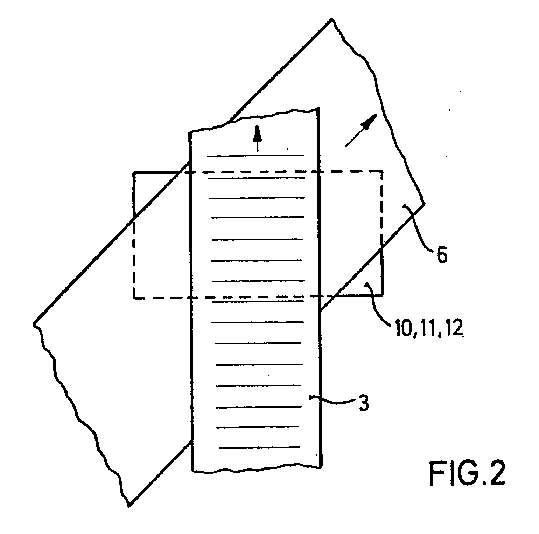

Eine vollkommene Ausnutzung der gesamten Oberfläche des Faservliesbandes erzielt man,

3 0 003 292 4

wenn das zu reinigende Magnetband und die Faservliesbandanordnung nicht parallel, sondern in einem Winkel zwischen 10° und 80°, vorzugsweise 30° bis 60°, zueinanderstehen, so daß sich die in Fig. 2 gezeigte Führung des Magnetbandes 3 ergibt. Statt des Faservliesbandes können auch andere bekannte Reinigungsbänder, z.B. aus Leinen- oder Baumwolltuch verwendet werden.

### Patentansprüche

1. Anordnung zum kontinuierlichen Reinigen der Oberfläche von mit mindestens einer Magnetschicht versehenen Folienbahnen, insbesondere Magnetbändern, bei der die zu reinigende Oberfläche mit Hilfe einer Bahnführung mit einem Faservliesband in engem Kontakt steht, *dadurch gekennzeichnet,* daß im Bereich der Kontaktstelle hinter dem Faservliesband (6) auf der der Folienbahn (3) abgewandten Seite die einen Luftspalt begrenzenden Polschuhe (10, 11) eines Magneten (12) angeordnet sind.

2. Anordnung nach Anspruch 1, *dadurch gekennzeichnet,* daß der Magnet (12) zwischen der Auf- und Abwickelspule (8, 9) des Faservliesbandes (6) angeordnet ist.

3. Anordnung nach Anspruch 1 und 2, *dadurch gekennzeichnet,* daß die zu reinigende Bahn (3) in einem Winkel über das Faservliesband (6) geführt ist.

### Claims

1. An apparatus for continuously cleaning the surface of a web of plastic film provided with at least one magnetic coating, especially the surface of a magnetic tape, the surface to be cleaned being kept in close contact with a tape of nonwoven fabric by virtue of the configuration of the path of travel of the web, wherein the poles (10, 11) of a magnet (12), which define an air gap, are located in the region of the contact area, behind the tape of nonwoven fabric (6), on the side facing away from the web of plastics film (3).

2. An apparatus as claimed in claim 1, wherein the magnet (12) is located between the take-up and supply reels (8, 9) of the tape of nonwoven fabric (6).

3. An apparatus as claimed in claims 1 and 2, wherein the web (3) to be cleaned is guided at an angle over the tape of nonwoven fabric (6).

### Revendications

1. Dispositif pour le nettoyage continu de la surface de bandes de produit en feuille ou bandes minces munies d'au moins une couche magnétique, en particulier de bandes magnétiques, dans lequel la surface à nettoyer est maintenue en contact étroit avec une bande de mat de fibres au moyen d'un guidage de bande, caractérisé par le fait que les pièces polaires (10, 11) d'un aimant (12) définissant entre elles un entrefer sont montées dans la zone de contact à la suite de la bande de mat de fibres (6), sur la face opposée à la bande mince (3).

2. Dispositif selon la revendication 1, caractérisé par le fait que l'aimant (12) est monté entre la bobine réceptrice et la bobine débitrice (8, 9) de la bande (6) de mat de fibres.

3. Dispositif selon l'une des revendications 1 et 2, caractérisé par le fait que la bande (3) à nettoyer est guidée de façon à former un angle avec la bande (6) de mat de fibres.

FIG.1

FIG.2